# EUROPÄISCHE PATENTSCHRIFT

(11) **EP 1 924 414 B1**
(45) Veröffentlichungstag und Bekanntmachung des Hinweises auf die Patenterteilung: **25.01.2012**
(21) Anmeldenummer: 06778318.3
(22) Anmeldetag: 21.08.2006
(51) Int. Cl.: B29B 13/02, B29B 9/16, B65G 27/16

(54) **VERFAHREN UND VORRICHTUNG ZUM KRISTALLISIEREN VON ZUM VERKLEBEN NEIGENDEN KUNSTSTOFFGRANULATEN, INSBESONDERE PET- UND PU-GRANULATEN**
METHOD AND DEVICE FOR CRYSTALLISING PLASTIC GRANULES HAVING A GLUING TENDENCY, IN PARTICULAR PET AND PU GRANULES
PROCEDE ET DISPOSITIF POUR CRISTALLISER DES GRANULES PLASTIQUES AYANT TENDANCE A S'AGGLUTINER, EN PARTICULIER DES GRANULES DE PET ET DE PU

(30) Priorität: 29.08.2005 DE 102005040851
(43) Veröffentlichungstag der Anmeldung: 28.05.2008
(73) Patentinhaber: Vibra Maschinenfabrik Schultheis GmbH & Co., 63075 Offenbach (DE)
(72) Erfinder: WEYELL, Manfred, 63165 Mühlheim am Main (DE); MAURER, Johannes, 63486 Bruchköbel (DE)
(74) Vertreter: Beck & Rössig European Patent Attorneys
(86) Internationale Anmeldenummer: PCT/EP2006/065531
(87) Internationale Veröffentlichungsnummer: WO 2007/025903

(56) Entgegenhaltungen:
- EP-A- 1 281 642
- EP-A- 1 531 134
- EP-A2- 0 348 372
- DE-A1- 2 118 434
- DE-A1- 3 128 349
- US-A- 2 235 324
- US-A1- 2004 222 069

## Beschreibung

Die Erfindung bezieht sich auf ein Verfahren zum Kristallisieren von zum Verkleben neigenden Kunststoffgranulaten. Weiterhin bezieht sich die Erfindung auf eine entsprechende Vorrichtung.

Manche Kunststoffgranulate werden nach dem eigentlichen Granulierverfahren einer thermischen Nachbehandlung unterzogen, um die Struktur des Granulats zu verändern. So wird beispielsweise Polyethylenterephthalatgranulat, hier auch kurz als PET-Granulat bezeichnet, aus dem Granulierungsprozess zunächst in einem amorphen Zustand erhalten. Das amorphe Granulat wird in einem Nachbehandlungsschritt, der auch als Kristallisieren bezeichnet wird, in einen zumindest teilkristallinen Zustand überführt. Hierbei kommt es zu einer stärkeren Ausrichtung unter den Molekülketten. In der Praxis werden beim Kristallisieren von PET-Granulaten Kristallisationsgrade in der Größenordnung von 30 bis 50 Prozent erreicht.

Für die Kristallisation spielt die Temperaturführung eine wichtige Rolle. Zum einen muss das amorphe Granulat auf eine entsprechende Reaktionstemperatur gebracht bzw. auf dieser gehalten werden. Zum anderen neigen jedoch manche Granulate, wie beispielsweise PET-Granulat oder PU-Granulat, in der Übergangsphase zum Verkleben. Bei PET-Granulaten wird das Granulat bereits unter der für die Kristallisation erforderlichen Reaktionstemperatur, die bei etwa 80° bis 170° Celsius liegt, klebrig. Um eine Agglomeration der Granulatteilchen zu vermeiden, müssen diese daher während der Kristallisation bewegt werden. Die Neigung zum Verkleben nimmt mit zunehmendem Kristallisationsgrad ab.

Während bei herkömmlichen Granulierverfahren das amorphe Granulat mit Temperaturen kleiner 80° Celsius einem Kristallisationsschritt unterzogen und dabei unter starker Bewegung aufgeheizt wird, ist in letzter Zeit im Zusammenhang mit Unterwassergranulierverfahren vorgeschlagen worden, das aus dem Prozess erhaltene vorgetrocknete, heiße Granulat während eines unmittelbar nachgeschalteten Kristallisationsvorgangs einer Schwingungserregung auszusetzen. Durch die Schwingungsanregung wird ein Verkleben der Granulatteilchen verhindert. Gleichzeitig kann die in den Granulatteilchen gespeicherte Prozesswärme für die Kristallisation ausgenutzt werden, so dass bei Unterwassergranulierverfahren keine Zusatzwärme benötigt wird. Im Gegensatz hierzu müssen Granulate, die beispielsweise in einem Silo zwischengespeichert werden, zum Vermeiden des Verklebens zunächst abgekühlt und anschließend für das Kristallisieren wieder erwärmt werden.

In der WO 2005/044901 wird ein Verfahren zur thermischen Nachbehandlung eines PET-Granulats beschrieben, bei dem das amorphe Granulat zum Kristallieren durch eine Vibrationsrinne geleitet wird. Diese Rinne ist durch wehrartige Zwischenwände in mehrere, aufeinanderfolgende Kammern unterteilt. Durch Vibrationsmotoren wird die Rinne in ihrer Längserstreckungsrichtung in Schwingungen versetzt. Das Granulat wird so durch die Schwingungserregung entlang der Rinne gefördert. Die Zwischenwände bewirken dabei einen Aufstau des Granulatstroms, so dass es zu einer Verwirbelung in Längsrichtung kommt. Dabei überwinden die einzelnen Granulatteilchen irgendwann die wehrartigen Zwischenwände und gelangen zum Granulatauslass. Die Vibrationsrinne stellt in ihrer Wirkung folglich eine Hintereinanderschaltung mehrerer Rührkessel dar. Hierdurch kann zwar ein Verkleben der einzelnen Granulatteilchen verhindert und eine Kristallisation erzielt werden. Diese Konfiguration besitzt jedoch den Nachteil eines verhältnismäßig großen Verweilzeitspektrums der Granulatteilchen.

Die Verwendung einer Schwingfördereinrichtung zum Kristallisieren von PET-Granulat ist weiterhin aus der DE 10 2004 050 356 A1 bekannt. Auch hier erfolgt die Schwingungserregung in Transportrichtung. Der Verbleib der Granulatteilchen in der Schwingfördereinrichtung ist mit Verweilzeiten in der Größenordnung von 20 bis 90 Sekunden im Vergleich zu der WO 2005/044901 verhältnismäßig kurz. Zwar kann hier ein besseres Verweilzeitspektrum erzielt werden, jedoch ist der Weg, den die einzelnen Granulatteilchen zurücklegen ebenfalls verhältnismäßig kurz, was deren Interaktionsmöglichkeiten mit anderen Granulatteilchen einschränkt. Dies ist für einen Temperaturausgleich unter den Granulatteilchen ungünstig. So besitzen Teilchen, die vorwiegend an der Oberfläche des Granulatstroms die Rinne durchlaufen ein anderes Temperaturprofil, als bodenähere Teilchen.

Ein gutes Verweilzeitspektrum soll auch mit einem vertikalen Schachtreaktor erreicht werden, wie er in der DE 100 49 263 A1 offenbart wird. Eine Schwingungserregung ist hierbei allerdings nicht vorgesehen.

Aus der DE 21 18 434 A ist ein Rührkesselverfahren mit einer nachfolgenden Rinne bekannt, in der Granulatteilchen mit Heißluft beaufschlagt werden. Um einen Vorschub von Produkt in der Rinne zu gewährleisten, wird diese in herkömmlicher Weise längs sowie auf und ab gerüttelt.

Dieses Verfahren wird mit einem Kristallisieren allein in der Rinne verglichen. Gemäß der DE 21 18 434 A wird im Kombinationsbetrieb ein verklebter Anteil von 1% erzielt, wohingegen bei einem herkömmlichen Verfahren in einer Rinne der verklebte Anteil 50% beträgt. Verklebtes Produkt ist jedoch unerwünscht, weswegen laut DE 21 18 434 A das Rührkesselverfahren zu bevorzugen sei.

Aus der EP 0 348 372 A2, der US 2004/222069 A und der US 2,235,324 A sind verschiedene Fördereinrichtungen bekannt, bei denen ein Produktvorschub in Längsrichtung in herkömmlicher Weise durch eine Längs- und Auf-und-Ab-Erregung bewirkt wird.

Vor diesem Hintergrund liegt der Erfindung die Aufgabe zugrunde, ein Verfahren der eingangs genannten Art im Hinblick auf ein enges Verweilzeitspektrum und ein homogenes Temperaturprofil zu verbessern sowie eine entsprechende Vorrichtung anzugeben.

Diese Aufgabe wird durch ein Verfahren zum Kristallisieren von zum Verkleben neigenden Kunststoffgranulaten, insbesondere PET- und PU-Granulaten, nach Patentanspruch 1 gelöst. Weiterhin wird die obengenannte Aufgabe durch eine hierzu geeignete Vorrichtung zum Kristallisieren nach Patentanspruch 6 gelöst.

Durch die Schwingungserregung in Querrichtung bewegen sich die Granulatteilchen an der Innenwand der Vibrationsrinne nach oben und rutschen dann bei Erreichen senkrechterer Wandabschnitte über den nachfolgend ansteigenden Granulatteilchen in die Rinne zurück. Hierdurch entsteht ein ununterbrochener, kontinuierlicher Granulatstrom mit hoher Interaktion der Granulatteilchen untereinander, so dass diese Prozesswärme untereinander austauschen können. Auf diese Weise wird nicht nur ein sehr enges Verweilzeitspektrum der Granulatteilchen in der Kristallisationsstufe erzielt, sondern zugleich auch ein sehr homogenes Temperaturprofil, was sich vorteilhaft auf die Produktqualität auswirkt.

Die Schwingungserregung quer zur Längserstreckungsrichtung der Rinne enthält eine Richtungskomponente senkrecht zu einer Ebene, die durch die Längserstreckungsrichtung der Rinne und die Richtung der Schwerkraft aufgespannt wird. Die Schwingungserregung ist somit eine gerichtete oder kreisförmige Schwingung, die in jedem Fall zumindest eine waagerechte Komponente in der senkrecht auf der Längsstreckungsrichtung der Rinne stehenden Querschnittebene aufweist. Dies ermöglicht eine Schraubenbewegung des Granulats in der Rinne.

Gemäß einer vorteilhaften Ausgestaltung der Erfindung kann der Vorschub des Granulats durch die Vibrationsrinne von einem Granulateinleitungsbereich an einem Endabschnitt der Vibrationsrinne zu einem Granulatauslass am gegenüberliegenden Endabschnitt der Vibrationsrinne im wesentlichen durch das Zuführen von Granulat am Granulateinlass bewirkt werden. Dem Schwingungserreger kommt primär die Aufgabe der Erzeugung einer Querbewegungskomponente zu. Dadurch vollführt der Granulatstrom in der Rinne eine schraubenförmige Bewegung.

Jedoch kann durch eine geringfügige Verschränkung des bzw. der Schwingungserzeuger mit diesem bzw. diesen auch eine Komponente längs der Vibrationsrinne generiert werden, um den

Produktvorschub zu verstärken oder durch eine entgegengerichtete Einwirkung zu verlangsamen oder umzukehren.

Gemäß einer weiteren, vorteilhaften Ausgestaltung ist die Wirkrichtung des bzw. der Schwingungserreger verstellbar. Durch eine entsprechende Ansteuerung kann so z.B. während des Betriebs die Verweilzeit in der Vibrationsrinne durch eine Vergrößerung oder Verminderung der Antriebskomponente längs der Vibrationsrinne in bzw. entgegen des Produktvorschubs sehr leicht verändert werden. Überdies ermöglicht die Verstellung eine schnelle Entleerung.

Alternativ kann ein Schwingungserreger vorgesehen sein, der längs zu der Vibrationsrinne ausgerichtet ist. Durch eine entsprechende Anordnung, Schrägstellung und/oder Einstellung dieses Schwingungserregers lassen sich Schwingungen erzeugen, die sowohl Quer- als auch Längskomponenten aufweisen.

Das erfindungsgemäße Verfahren verwendet vorzugsweise vorgetrocknetes Granulat aus einem Unterwassergranulierverfahren, das kontinuierlich zugeführt wird.

Es ist jedoch auch möglich, in der Vibrationsrinne Granulat aus einem Stranggranulierverfahren zuzuführen. Hierbei kann jedoch ein zusätzlicher Wärmeeintrag erforderlich sein, um das Granulat auf Reaktionstemperatur zu bringen.

Ein Wärmeeintrag kann beispielsweise über Prozessluft erfolgen. Für das Kristallisieren von PET-Granulaten hat es sich als besonders vorteilhaft erwiesen, wenn die Prozessluft über Düsen von oben in oder auf das in der Vibrationsrinne befindliche Granulat eingeblasen wird.

Alternativ oder ergänzend ist es jedoch auch möglich, die Luft über eines oder mehrere im Granulatstrom angeordnete perforierte Rohre einzublasen.

Eine weitere Möglichkeit besteht darin, Prozessluft durch Öffnungen in der Wand der Vibrationsrinne einzublasen. Diese Öffnungen sind vorzugsweise in einem Bodenbereich angeordnet, können sich jedoch auch in senkrechtere Wandabschnitte erstrecken.

Weiterhin ist ein Wärmeeintrag durch Strahlung oder Kontaktübertragung möglich. Hierzu können beispielsweise Wärmestrahler über der Vibrationsrinne oder Heizelemente im Granulatstrom angeordnet werden.

Zudem besteht die Möglichkeit, dem Granulat bei Bedarf über die Prozessluft oder anderweitige Kühleinrichtungen gezielt Wärme zu entziehen.

Weitere, vorteilhafte Ausgestaltungen der Erfindung sind in den Patentansprüchen angegeben.

Nachfolgend wird die Erfindung anhand von in der Zeichnung dargestellten Ausführungsbeispielen näher erläutert. Die Zeichnung zeigt in:
- Figur 1: ein erstes Ausführungsbeispiel einer Vorrichtung zum Kristallisieren von zum Verkleben neigenden Kunststoffgranulaten in Seitenansicht,
- Figur 2: die Vorrichtung aus Figur 1 in einer Schnittdarstellung quer zur Längserstreckungsrichtung,
- Figur 3: ein zweites Ausführungsbeispiel einer Vorrichtung zum Kristallisieren von zum Verkleben neigenden Kunststoffgranulaten in Seitenansicht,
- Figur 4: die Vorrichtung aus Figur 3 in einer Schnittdarstellung quer zur Längserstreckungsrichtung,
- Figur 5: eine abgewandelte Ausführungsform einer Vibrationsrinne mit veränderter Prozessluftzufuhr in einer Querschnittsansicht,
- Figur 6: eine zweite Abwandlung der Vibrationsrinne im Schnitt,
- Figur 7: eine dritte Abwandlung der Vibrationsrinne im Schnitt,
- Figur 7a: eine Modifikation der Wärmeübertragung nach Figur 7,
- Figur 8: ein drittes Ausführungsbeispiel einer Vorrichtung zum Kristallisieren von zum Verkleben neigenden Kunststoffgranulaten in Seitenansicht,
- Figur 9: die Vorrichtung aus Figur 8 in einer Schnittdarstellung quer zur Längserstreckungsrichtung,
- Figur 10: eine Schnittansicht einer weiteren Vibrationsrinne mit asymmetrischem Querschnitt,
- Figur 11: eine Schnittansicht zur Veranschaulichung einer alternativen Anordnung eines Schwingungserregers,
- Figur 12: eine Schnittansicht zur Veranschaulichung einer Seitwärtsneigung der Vibrationsrinne,
- Figur 13: ein viertes Ausführungsbeispiel einer Vibrationsrinne mit Leitblechen,
- Figur 14: eine Querschnittsansicht der Rinne aus Fig. 13 auf ein Leitblech.

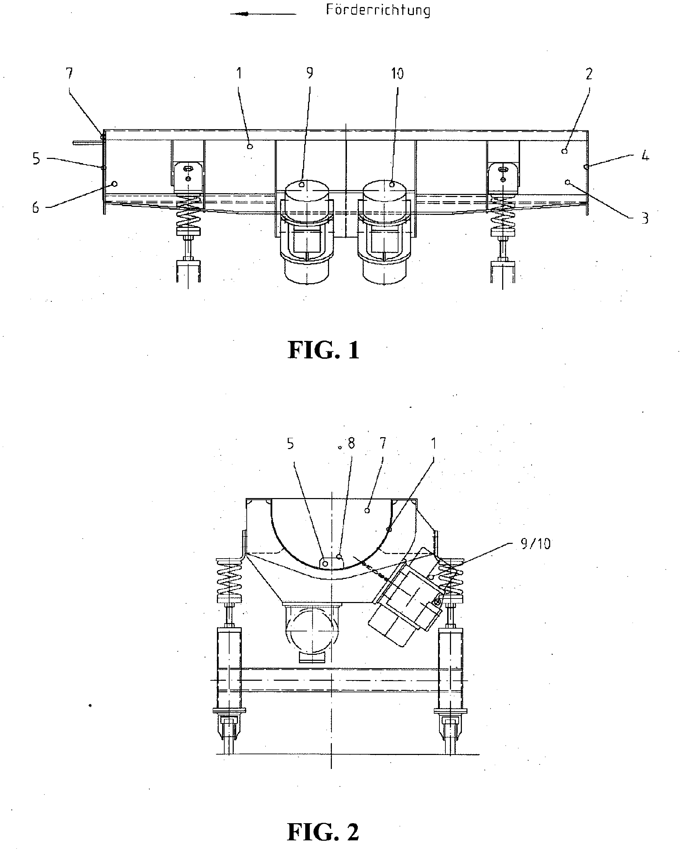

Das erste Ausführungsbeispiel in den Figuren 1 und 2 zeigt eine Vorrichtung zum Kristallisieren von zum Verkleben neigenden Kunststoffgranulaten, die bei einer erhöhten Temperaturen einer thermischen Nachbehandlung unterzogen werden. Hierunter fallen insbesondere Polymergranulate wie Polyester- und Polyurethangranulate. Im folgenden wird ohne Beschränkung auf PET-Granulat Bezug genommen, das beispielsweise aus einem Unterwassergranulierverfahren oder Stranggranulierverfahren in zunächst amorpher Form erhalten wird.

Das PET-Granulat wird zur Kristallisation in einer federelastisch gelagerten Vibrationsrinne 1 einer Schwingungserregung unterworfen. In Figur 1 ist eine entsprechende Vorrichtung dargestellt, die sich insbesondere für Granulate eignet, die bei ihrer Einleitung in die Vibrationsrinne 1 bereits Reaktionstemperatur besitzen, so dass ein zusätzlicher Wärmeeintrag nicht erforderlich ist.

Das bereits entwässerte und vorgetrocknete Granulat gelangt in einem Granulateinleitungsbereich 2 in die im wesentlichen horizontale Vibrationsrinne 1, deren betreffender Endabschnitt 3 in Längserstreckungsrichtung der Vibrationsrinne 1 durch eine Stirnwand 4 abgesperrt ist. Zur Zuleitung von Granulat kann gegebenenfalls an der Stirnwand 4 eine entsprechende Öffnung oder ein Einfüllstutzen vorgesehen sein. Das kristallisierte Granulat wird an einem Granulatauslass 5 am gegenüberliegenden Endabschnitt 6 der Vibrationsrinne 1 ausgetragen. Eine den Querschnitt absperrende Stirnwand 7 ist hierzu mit einer geeigneten, gegebenenfalls durch eine Klappe verschließbaren Auslassöffnung 8 versehen.

Die Vibrationsrinne 1 weist in ihrer Längserstreckungsrichtung zwischen dem Granulateinleitungsbereich 2 und dem Granulatauslass 5 einen barrierefreien Querschnittsverlauf auf. Insbesondere ist dieser frei von Überlaufwänden, Wehren und dergleichen, so dass sich ein für alle Granulatteilchen im wesentlichen gleichartiger, homogener Durchlauf durch die Rinne ergibt. Vorzugsweise ist der Querschnitt der Vibrationsrinne 1 über die gesamte Länge zwischen dem Granulateinleitungsbereich 2 und dem Granulatauslass 5 konstant. Es ergibt sich so ein Querschnittsverlauf der Vibrationsrinne 1, der von einem Einleitungsbereich eines Granulatstroms bis zum Granulatauslass 5 kontinuierlich und unterbrechungsfrei ist.

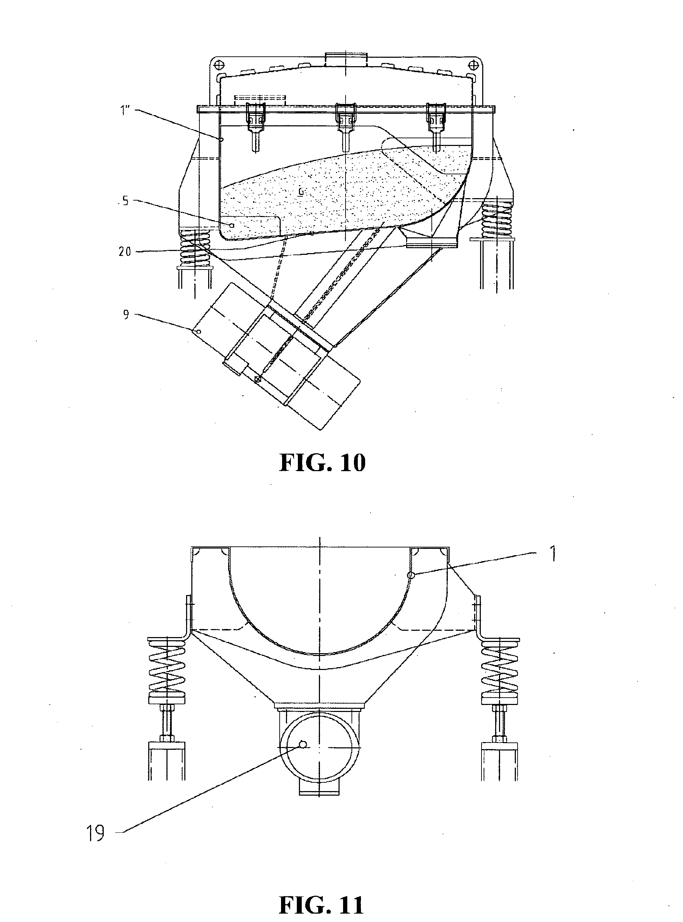

Um ein Verkleben der Granulatteilchen zu vermeiden und insbesondere um ein möglichst gleichmäßiges Temperaturprofil zu erzielen, erfolgt die Schwingungserregung der Vibrationsrinne 1 quer zu deren Längserstreckungsrichtung. Figur 1 zeigt hierzu beispielhaft zwei Drehstromvibrationsmotoren 9 und 10, die seitlich an der Vibrationsrinne 1 angebracht sind und deren Wirkrichtung quer zu der Vibrationsrinne 1 verläuft. Anstelle der Drehstromvibrationsmotoren 9 und 10 kann alternativ, wie durch gestrichelte Linien in Figur 2 angedeutet, auch ein einziger Schwingungserreger an der Rinne angebracht werden, der durch entsprechende Anordnung eine Querschwingung der Rinne 1 erzeugt. Eine Konfiguration mit einem in Längsrichtung unter der Rinne 1 angeordneten Schwingungserreger 19 ist in Figur 11 beispielhaft dargestellt.

Ein Querschnitt gleich oder ähnlich dem in Figur 2 dargestellten bewirkt in Verbindung mit der zuvor genannten Schwingungserregung, dass wandnahe Granulatteilchen an der Wand der Vibrationsrinne in einen senkrechteren Bereich gebracht werden, um dann auf den nachfolgenden Granulatteilchen zurückzurutschen, so dass sich eine Zirkulation in Querrichtung einstellt.

Bei dem dargestellten, ersten Ausführungsbeispiel dient die Schwingungserregung nicht dem Fördern des Granulats zum Granulatauslass 5. Vielmehr wird der Vorschub des Granulatstroms allein durch die Zufuhr von Granulat im Granulateinlassbereich 2 bewirkt. In Verbindung mit der Schwingungserregung in Querrichtung vollführt der Granulatstrom vom Granulateinlassbereich 2 zum Granulatauslass 5 eine ununterbrochene schraubenförmige Bewegung, die eine hohe Interaktion der Granulatteilchen mit homogenem Temperaturenprofil und engem Verweilzeitspektrum ermöglicht.

Von diesem ersten Ausführungsbeispiel sind zahlreiche Abwandlungen möglich, die nachfolgend anhand weiterer Ausführungsbeispiele und Ausgestaltungsformen erläutert werden sollen.

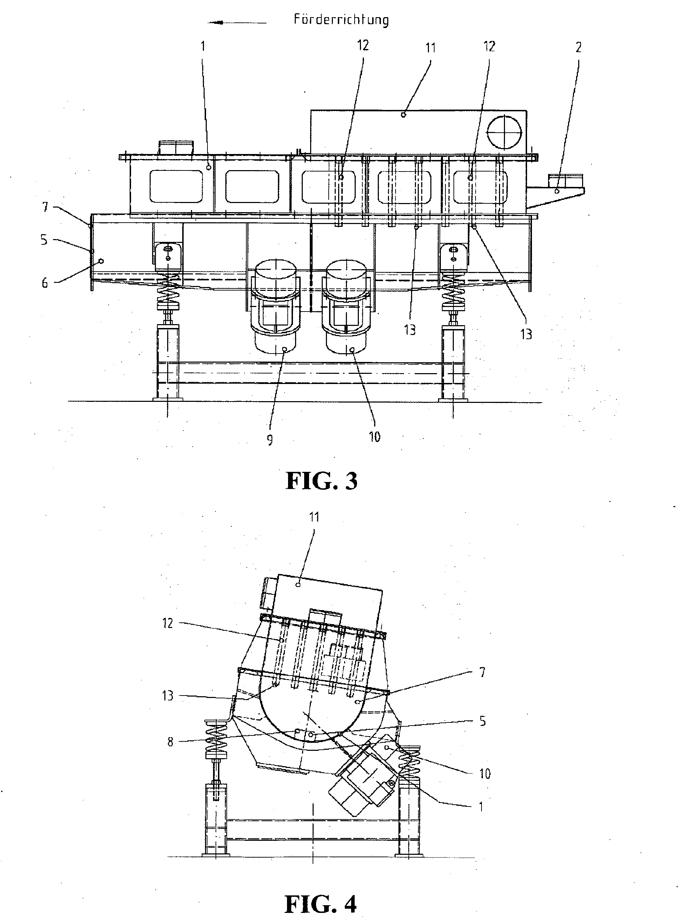

Die Figuren 3 und 4 zeigen eine Vorrichtung, deren Vibrationsrinne 1 und Schwingungserreger 9 und 10 entsprechend dem ersten Ausführungsbeispiel ausgebildet sind. Zusätzlich ist an dieser eine Einrichtung für einen Wärmeeintrag vorgesehen. Hierdurch kann die Überleitung des amorphen Granulats aus einem Granulierverfahren in bezug auf das Aufrechterhalten der Prozesswärme weniger aufwendig gestaltet werden. Überdies können kalte Granulate ohne Risiko des Verklebens auf die benötigte Reaktionstemperatur aufgeheizt werden.

Bei dem zweiten Ausführungsbeispiel ist über der Vibrationsrinne 1 hierzu eine Einrichtung 11 zur Bereitstellung von Prozessluft vorgesehen. Diese umfasst unter anderem eine Vielzahl von Düsen 12, die sich von oben in die Rinne 1 erstrecken. Jedoch kann die Prozessluft auch nur mit einer oder wenigen Düsen bereitgestellt werden. Die Auslassöffnungen 13 der Düse bzw. Düsen 12 können dabei unmittelbar über dem Granulatstrom angeordnet sein. Es ist jedoch auch möglich, dass die Düsen 12 mit ihren Auslassöffnungen 13 in den Granulatstrom hineinragen. Die Temperatur der zugeführten Luft lässt sich dabei den jeweiligen Bedürfnissen anpassen. Vorzugsweise sind die Düsen 12 in unmittelbarer Nähe des Granulateinlassbereichs 2 angeordnet. Es hat sich gezeigt, dass mit einer Luftzufuhr von oben in den Granulatstrom insbesondere bei PET-Granulaten sehr gute Ergebnisse erzielt werden.

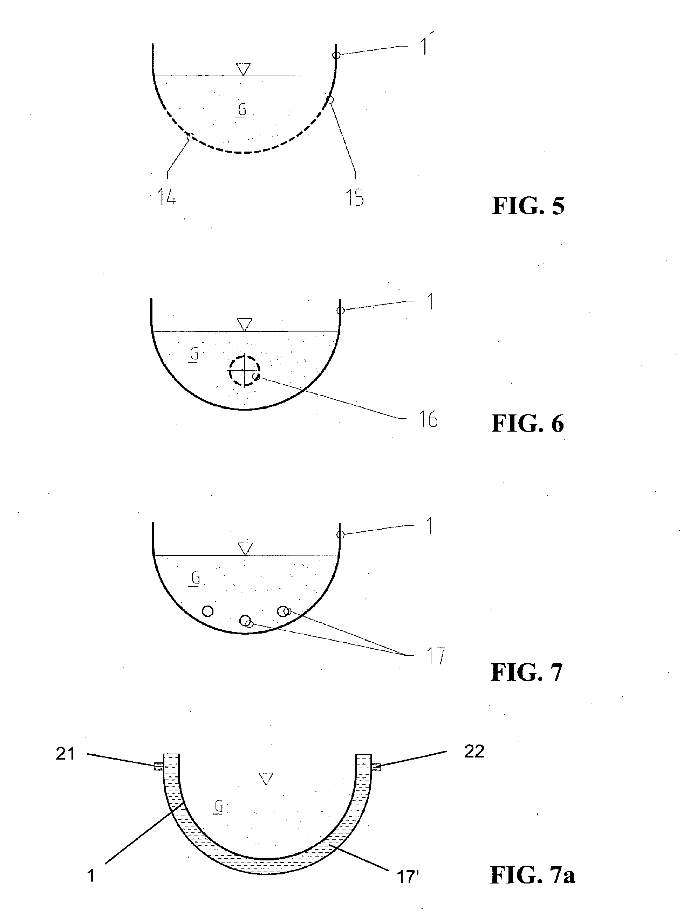

Die Einleitung von Prozessluft kann, wie in Figur 5 anhand einer weiteren Ausgestaltungsform für die Vibrationsrinne 1' gezeigt, jedoch auch von unten vorgenommen werden. Dazu sind im Bereich des Granulatstroms G eine Vielzahl von Öffnungen 14 insbesondere im Bereich der Bodenwand 15 der Rinne 1' ausgebildet, die von einer nicht näher dargestellten Prozessluftquelle versorgt werden.

Figur 6 zeigt eine weitere Ausgestaltungsform, bei der ein perforiertes Rohr 16 im Granulatstrom G angeordnet ist. Das perforierte Rohr 16 verläuft im wesentlichen in Rinnenmitte in Längsrichtung. Über die Öffnungen des Rohrs 16 kann wiederum Prozessluft eingeblasen werden.

Unter Prozessluft wird hier jedes gasförmige Medium verstanden, das geeignet ist, an das Granulat Wärme zu übertragen. Es ist überdies denkbar, der Prozessluft reaktionsfördernde Substanzen zuzusetzen oder über die Prozessluft Zusatzstoffe in das Granulat einzutragen. Weiterhin kann Prozessluft auch zu Kühlzwecken eingesetzt werden.

Figur 7 zeigt eine weitere Ausgestaltungsform der Vibrationsrinne 1, in der zum Wärmeeintrag durch Kontaktübertragung Heizelemente 17 im Bereich des Granulatstroms G angeordnet sind. Diese Heizelemente 17 können beispielsweise als Wärmeträgerrohre ausgebildet sein. Denkbar sind jedoch beispielsweise auch elektrische Heizelemente. In einer weiteren Modifikation kann die Wand der Vibrationsrinne 1' als Heizung 17' ausgeführt sein, wie dies in Figur 7a gezeigt ist. Die Wand wird von einem Arbeitsmedium durchströmt, das z.B. bei 21 in die Wand eintritt und diese bei 22 wieder verlässt.

Zudem können die verschiedenen Vorgehensweisen des Wärmeeintrags miteinander kombiniert werden.

Anstelle eines Wärmeeintrags kann mit den genannten Einrichtungen mittels der Prozessluft bzw. des Arbeitsmediums gegebenenfalls auch gekühlt werden.

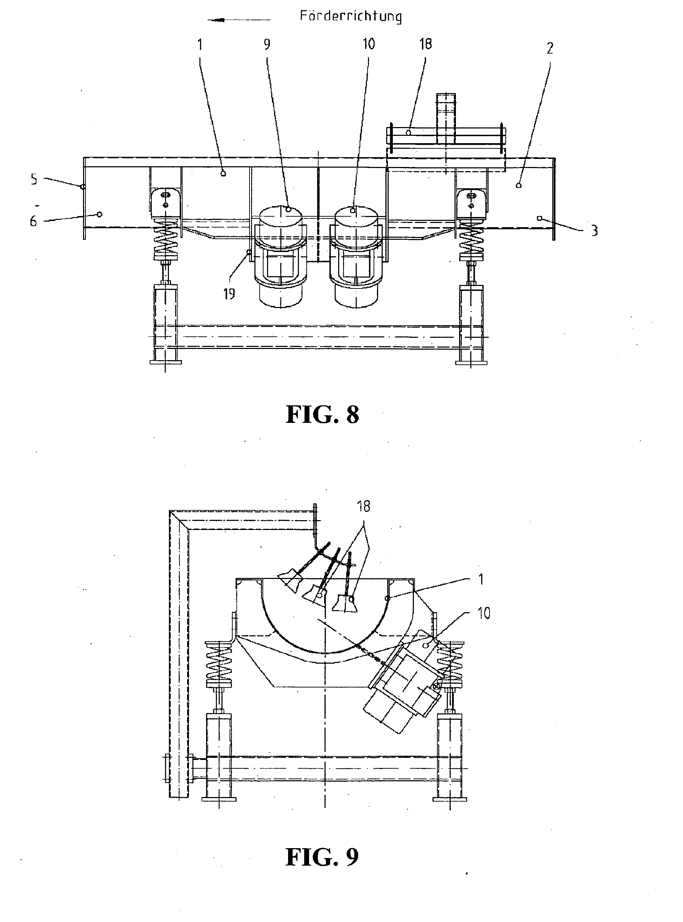

Ein drittes Ausführungsbeispiel einer Vorrichtung zum Kristallisieren von zum Verkleben neigenden Kunststoffgranulaten ist in den Figuren 8 und 9 dargestellt. Auch in diesem Fall ist, wie in dem ersten Ausführungsbeispiel, eine Vibrationsrinne 1 mit zwei Schwingungserregern 9 und 10 vorgesehen, die eine Schwingungserregung quer zur Längserstreckungsrichtung bewirken. Im Unterschied zu den bisher erläuterten Ausführungsbeispielen erfolgt der Wärmeeintrag in das Granulat hier durch Wärmestrahlung. Dazu sind im Granulateinlassbereich 2 mehrere, auf die Oberfläche des Granulatstroms gerichtete Strahler 18 vorgesehen.

Die seitlichen Querschwingungserreger 9 und 10 können in der Vorschubrichtung etwas verschwenkt sein, um den zulaufbedingten Vorschub zu verstärken oder abzuschwächen. Hierdurch lässt sich die Verweilzeit der Granulatteilchen in der Rinne beeinflussen. Zudem kann bei Bedarf auch gegen eine Steigung gefördert werden.

Überdies können die Querschwingungserreger 9 und 10 zusätzlich mit Inkrementalgebern ausgestattet und mittels einer geeigneten Steuerung in der Wirkachse gekippt werden. Dies ermöglicht eine schnelle, stufenlos einstellbare Veränderung der Vorschubkomponente. Zudem besteht die Möglichkeit, die Vorschubrichtung umzukehren.

Anstelle von zwei seitlichen Querschwingungserregern 9 und 10 kann auch hier wieder ein einziger, zentraler Schwingungserreger 19 in beliebiger Anordnung vorgesehen werden.

In sämtlichen Fällen bleibt jedoch die Querkomponente während des Kristallisierens vorherrschend. Die genannten Antriebsmaßnahmen lassen sich bei allen beschriebenen Ausführungsbeispielen und Ausgestaltungsformen einsetzen.

Figur 10 zeigt ein Beispiel für die Modifikation des Querschnitts der Vibrationsrinne 1", der nicht notwendigerweise kreisbogenförmig sein muss. Vielmehr kann der Querschnitt z. B. mit einem im wesentlichen flachen Boden 20 in Wirkrichtung eines Querschwingungserzeugers 9 ausgeführt werden. Alternativ kann dieser Boden auch in Wirkrichtung ansteigen, abfallen oder waagrecht angeordnet sein.

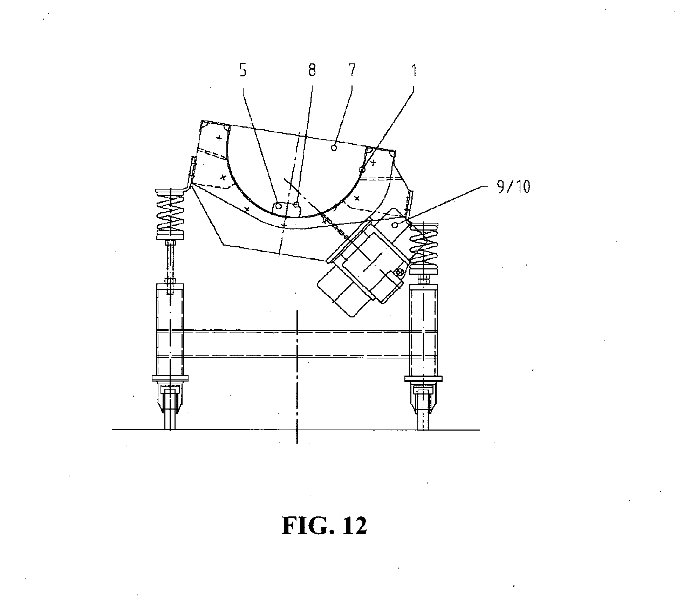

Figur 12 zeigt weiterhin die Möglichkeit, die Vibrationsrinne 1 seitlich zu verkippen, so dass der Wandbereich, an dem die Granulatteilchen hochlaufen, höher als der gegenüberliegende Wandbereich ist.

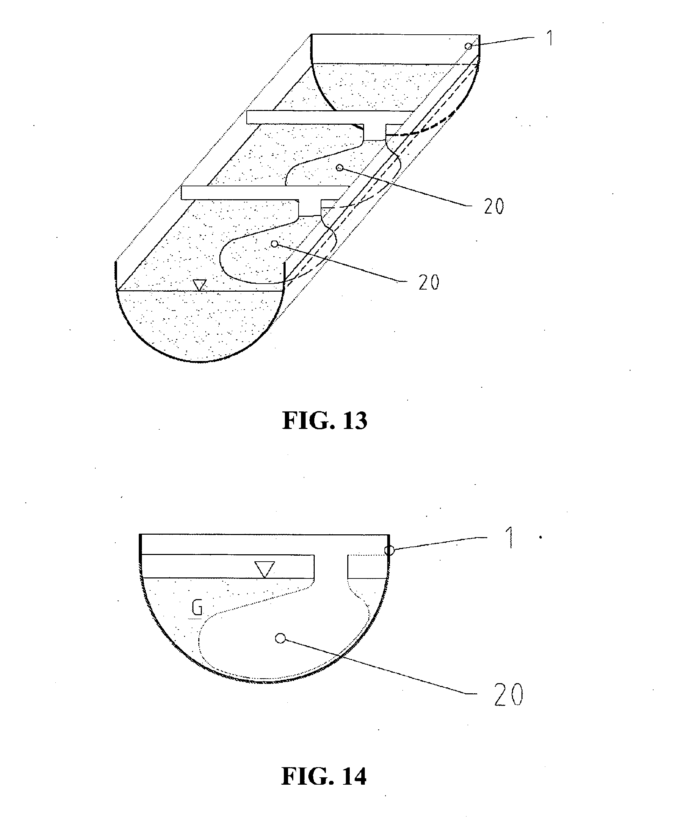

Bei der in den Figuren 13 und 14 gezeigten Ausgestaltungsform sind in die Vibrationsrinne 1 Leitbleche 20 eingebaut. Diese hemmen den kontinuierlichen Vorschub der Granulatteilchen nicht, bilden also keine Barrieren oder Wehre. Vielmehr sind diese derart angeordnet, um einen möglichst gleichmäßigen Durchlauf der Granulatteilchen auf einer schraubenförmigen Bahn durch die Vibrationsrinne zu begünstigen. Die Leitbleche 20 können mit einem Spalt zum Rinnenboden ausgeführt werden, um ein Entleeren der Rinne ohne Reste zu ermöglichen. Überdies können die Leitbleche 20 auch leicht verschränkt zum Rinnenquerschnitt eingebaut werden, wodurch eine zusätzliche Mischkomponente erzeugt werden kann.

Die Erfindung wurde vorstehend anhand von Ausführungsbeispielen näher erläutert. Sie ist jedoch nicht auf diese Ausführungsbeispiele beschränkt, sondern umfasst alle durch die Patentansprüche definierten Vorrichtungen und Verfahren.

## Patentansprüche

1. Verfahren zum Kristallisieren von zum Verkleben neigenden Kunststoffgranulaten, insbesondere Polyethylenterephthalat- und Polyurethan-Granulaten, bei dem das Granulat im Bereich seiner Reaktionstemperatur in einer Vibrationsrinne (1) einer Schwingungserregung unterworfen wird, **dadurch gekennzeichnet, dass** die Schwingungserregung quer zur Längserstreckungsrichtung der Vibrationsrinne (1) und zur Schwerkraftrichtung erfolgt und ein Vorschub des Kunststoffgranulats durch die Vibrationsrinne (1) durch ein Zuführen von Kunststoffgranulat an einem Granulateinleitungsbereich und/oder durch eine zusätzliche Schwingungserregungkomponente in Längserstreckungsrichtung der Vibrationsrinne (1) erfolgt, derart, dass in der Vibrationsrinne (1) befindliches Kunststoffgranulat in Längserstreckungsrichtung der Vibrationsrinne (1) einer schraubenförmigen Bewegung unterworfen wird.

2. Verfahren nach Anspruch 1, **dadurch gekennzeichnet, dass** das Granulat eine zwischen einem Granulateinleitungsbereich (2) und einem Granulatauslass (5) in Längserstreckungsrichtung von Wehren freie Vibrationsrinne (1) durchläuft.

3. Verfahren nach Anspruch 1 oder 2, **dadurch gekennzeichnet, dass** der Vorschub des Granulats durch die Vibrationsrinne (1) von einem Granulateinleitungsbereich (2) an einem Endabschnitt (3) der Vibrationsrinne zu einem Granulatauslass (5) am gegenüberliegenden Endabschnitt (6) der Vibrationsrinne im wesentlichen durch das Zuführen von Granulat am Granulateinleitungsbereich (2) bewirkt wird.

4. Verfahren nach einem der Ansprüche 1 bis 3, **dadurch gekennzeichnet, dass** der Vibrationsrinne (1) kontinuierlich vorgetrocknetes Granulat aus einem Unterwassergranulierverfahren zugeführt wird.

5. Verfahren nach einem der Ansprüche 1 bis 4, **dadurch gekennzeichnet, dass** der Vibrationsrinne (1) Granulat aus einem Stranggranulierverfahren zugeführt wird, wobei in der Vibrationsrinne ein zusätzlicher Wärmeeintrag in das Granulat erfolgt.

6. Vorrichtung zum Kristallisieren von zum Verkleben neigenden Kunststoffgranulaten, insbesondere Polyethylenterephthalat- und Polyurethan-Granulaten, umfassend:
- eine Vibrationsrinne (1) zur Aufnahme von Granulat im Bereich seiner Reaktionstemperatur, und
- mindestens einen an der Vibrationsrinne (1) angebrachten Schwingungserreger (9, 10; 19) zur Erzeugung einer Schwingungsanregung,
**dadurch gekennzeichnet, dass** der mindestens eine Schwingungserreger (9, 10; 19) derart konfiguriert ist, dass dessen Schwingungserregung eine Querkomponente senkrecht zu einer durch die Längserstreckungsrichtung der Vibrationsrinne (1) und die Schwerkraftrichtung gebildeten Ebene aufweist.

7. Vorrichtung nach Anspruch 6, **dadurch gekennzeichnet, dass** die Vibrationsrinne (1) zwischen einem Granulateinleitungsbereich (2) und einem Granulatauslass (5) in Längserstreckungsrichtung einen unterbrechungsfreien, konstanten Querschnitt aufweist.

8. Vorrichtung nach Anspruch 6, **dadurch gekennzeichnet, dass** in der Vibrationsrinne (1) mindestens ein den Granulatstrom führendes Leitblech (20) vorgesehen ist.

9. Vorrichtung nach einem der Ansprüche 6 bis 8, **dadurch gekennzeichnet, dass** Mittel zum Einblasen von Prozessluft zum Wärmeeintrag und/oder zur Kühlung vorgesehen sind, nämlich:
a) mindestens eine Düse (12), die sich zum Einblasen von Prozessluft von oben in Richtung der Vibrationsrinne (1) erstreckt, und/oder b) ein in der Vibrationsrinne (1) angeordnetes perforiertes Rohr (16) zum Einblasen von Prozessluft, und/oder c) in der Wand (15) der Vibrationsrinne (1'), insbesondere im Bodenbereich und/oder im Seitenwandbereich vorgesehene Öffnungen (14) zum Einblasen von Prozessluft.

10. Vorrichtung nach einem der Ansprüche 6 bis 9, **dadurch gekennzeichnet, dass** über der Vibrationsrinne (1) Wärmestrahler (18) angeordnet sind.

11. Vorrichtung nach einem der Ansprüche 6 bis 10, **dadurch gekennzeichnet, dass** in der Vibrationsrinne (1) mindestens ein Heiz- und/oder Kühlelement (17) zum Wärmeeintrag und/oder zur Wärmeabfuhr durch Kontaktübertragung angeordnet ist.

12. Vorrichtung nach einem der Ansprüche 6 bis 11, **dadurch gekennzeichnet, dass** zumindest der Bodenbereich der Vibrationsrinne (1) beheizbar und/oder kühlbar ist.

13. Vorrichtung nach einem der Ansprüche 6 bis 12, **dadurch gekennzeichnet, dass** die Schwingungserreger (9, 10; 19) eine Schwingung erzeugen, deren Komponente in Längserstreckungsrichtung der Vibrationsrinne (1) kleiner ist, als die Komponente in Querrichtung.

14. Vorrichtung nach einem der Ansprüche 6 bis 13, **dadurch gekennzeichnet, dass** die Wirkrichtung der Schwingungserreger (9, 10; 19) verstellbar ist.

15. Vorrichtung nach einem der Ansprüche 6 bis 14, **dadurch gekennzeichnet, dass** eine Steuereinrichtung zur Ansteuerung der Schwingungserreger (9, 10; 19) vorgesehen ist, um die Wirkache der Schwingungserreger (9, 10; 19) in Längserstreckungsrichtung der Vibrationsrinne (1) zu kippen und dadurch eine Vorschubkomponente in Längserstreckungsrichtung der Vibrationsrinne (1) im Betrieb zu verändern.

## Claims

1. Method for crystallising plastic granules having a tendency to conglutinate, in particular polyethylenterephthalate and polyurethane granules, wherein the granules are subjected to vibratory excitation at around their reaction temperature in a vibrating trough (1), **characterised in that** the vibratory excitation takes place transversely to the direction of longitudinal extension of the vibrating trough (1) and perpendicular to the direction of gravity and advance of the plastic granules is caused by feeding plastic granules at a granule inlet (2) and/or trough an additional component of vibratory excitation in the direction of longitudinal extension of the vibrating trough (1) so that the plastic granules in the vibrating trough (1) are subjected to a spiral movement in the direction of longitudinal extension of the vibrating trough (1).

2. Method according to claim 1, **characterised in that** the granules pass through a vibrating trough (1) that is free of weirs in direction of its longitudinal extension between a granule inlet (2) and a granule outlet (5).

3. Method according to claim 1 or 2, **characterised in that** the rate of advance of the granules through the vibrating trough (1) from a granule inlet (2) at one end portion (3) of the vibrating trough (1) to a granule outlet (5) at the opposite end portion (6) of the vibrating trough (1) is caused substantially by feeding granules at the granule inlet (2).

4. Method according to one of the claims 1 to 3, **characterised in that** pre-dried granules from an underwater granulation process are continuously fed into the vibrating trough (1).

5. Method according to one of the claims 1 to 4, **characterised in that** granules from a strand granulation process are fed into the vibrating trough (1), whereby additional heat is introduced into the vibrating trough.

6. A device for crystallising plastic granules having a tendency to conglutinate, in particular polyethylenterephthalate and polyurethane granules, comprising:
- a vibrating trough (1) for receiving granules at around their reaction temperature, and
- at least one vibration exciter (9, 10; 19) mounted on the vibrating trough (1) for generating vibratory excitation,
**characterised in that** the at least one vibration exciter (9, 10; 19) is configured so that its vibratory excitation has a transverse component perpendicular to a plane formed by the direction of longitudinal extension of the vibrating trough (1) and the direction of gravity.

7. Device according to claim 6, **characterised in that** the vibrating trough (1) has an uninterrupted, constant cross-section in a direction of longitudinal extension between a granule inlet (2) and a granule outlet (5).

8. Device according to claim 6, **characterised in that** at least one guide vane (20) guiding the flow of granules is provided in the vibrating trough (1).

9. Device according to one of claim 6 to 8, **characterised in that** means for blowing process air for heating and/or cooling are provided, namely:
a) at least one nozzle (12) that extends from above in direction of the vibrating trough (1) for blowing in process air, and/or b) a perforated pipe (16) that is located in the vibrating trough (1) for blowing in process air, and/or c) apertures (14) for blowing in process air, that are provided in the wall (15) of the vibrating trough (1'), in particular in a floor area and/or in a side wall area.

10. Device according to one of claim 6 to 9, **characterised in that** heat radiators (18) are located above the vibrating trough (1).

11. Device according to one of claim 6 to 10, **characterised in that** at least one heating and/or cooling element (17) is located in the vibrating trough (1) for introducing and/or evacuating heat by contact transfer.

12. Device according to one of claim 6 to 11, **characterised in that** at least the floor area of the vibrating trough (1) is configured to be heated and/or cooled.

13. Device according to one of claim 6 to 12, **characterised in that** the vibration exciters (9; 10; 19) generate vibration of which the component in the direction of longitudinal extension of the vibrating trough (1) is smaller than the component in the transverse direction.

14. Device according to one of claim 6 to 13, **characterised in that** the effective direction of the vibration exciters (9, 10; 19) is adjustable.

15. Device according to one of claim 6 to 14, **characterised in that** control means are provided for controlling the vibration exciters (9, 10; 19) to incline the effective axis of the vibration exciters (9, 10; 19) in the direction of longitudinal extension of the vibrating trough (1), thereby modifying a component of the rate of advance in the direction of longitudinal extension of the vibrating trough (1) during operation.

## Revendications

1. Procédé pour cristalliser des granulés de plastique qui ont tendance à coller, en particulier des granulés de polytéréphtalate d'éthylène et de polyuréthane, pour lequel les granulés sont soumis à une excitation d'oscillation dans une goulotte de vibration (1) dans la plage de leur température de réaction, **caractérisé en ce que** l'excitation d'oscillation se fait transversalement par rapport au sens d'extension dans le sens de la longueur de la goulotte de vibration (1) et par rapport au sens de la gravité et un avancement des granulés de plastique par la goulotte de vibration se fait par une alimentation de granulés de plastique dans une zone d'introduction des granulés et/ou par une composante d'excitation d'oscillation supplémentaire dans le sens d'extension dans le sens de la longueur de la goulotte de vibration (1) de telle manière que des granulés de plastique qui se trouvent dans la goulotte de vibration (1) sont soumis à un mouvement hélicoïdal dans le sens d'extension dans le sens de la longueur de la goulotte de vibration (1).

2. Procédé selon la revendication 1, **caractérisé en ce que** les granulés traversent une goulotte de vibration (1) libre de barrages entre une zone d'introduction des granulés (2) et une sortie des granulés (5) dans le sens d'extension dans le sens de la longueur.

3. Procédé selon la revendication 1 ou 2, **caractérisé en ce que** l'avancée des granulés à travers la goulotte de vibration (1) d'une zone d'introduction des granulés (2) à une section d'extrémité (3) de la goulotte de vibration vers une sortie de granulés (5) à la section d'extrémité opposée (6) de la goulotte de vibration est provoquée substantiellement par l'alimentation des granulés au niveau de la zone d'introduction des granulés (2).

4. Procédé selon l'une des revendications 1 à 3, **caractérisé en ce que** des granulés préséchés en continu provenant d'un procédé de granulation immergée sont amenés à la goulotte de vibration (1).

5. Procédé selon l'une des revendications 1 à 4, **caractérisé en ce que** des granulés provenant d'un procédé de granulation par extrusion sont amenés à la goulotte de vibration (1), un apport de chaleur supplémentaire dans les granulés étant réalisé dans la goulotte de vibration.

6. Procédé pour cristalliser des granulés de plastique qui ont tendance à coller, en particulier des granulés de polytéréphtalate d'éthylène et de polyuréthane, comprenant :
- une goulotte de vibration (1) pour recevoir des granulés dans la plage de leur température de réaction et
- au moins un excitateur d'oscillation (9, 10 ; 19) fixé sur la goulotte de vibration (1) pour produire une excitation d'oscillation,
**caractérisé en ce que** l'excitateur d'oscillation qui existe au moins (9, 10 ; 19) est configuré de telle manière que son excitation d'oscillation présente une composante transversale perpendiculairement à un plan formé par le sens d'extension dans le sens de la longueur de la goulotte de vibration (1) et le sens de la force de gravité.

7. Dispositif selon la revendication 6, **caractérisé en ce que** la goulotte de vibration (1) présente une section constante ininterrompue entre une zone d'introduction des granulés (2) et une sortie des granulés (5) dans le sens d'extension dans le sens de la longueur.

8. Dispositif selon la revendication 6, **caractérisé en ce qu'**au moins une tôle de guidage (20) qui guide le flux de granulés est prévue dans la goulotte de vibration (1).

9. Dispositif selon l'une des revendications 6 à 8, **caractérisé en ce que** des moyens sont prévus pour insuffler de l'air de processus pour l'apport de chaleur et/ou pour le refroidissement, à savoir :
a) au moins une tuyère (12) qui s'étend du haut en direction de la goulotte de vibration (1) pour insuffler de l'air de processus et/ou b) un tuyau perforé (16) placé dans la goulotte de vibration (1) pour insuffler de l'air de processus et/ou c) des ouvertures (14) prévues dans la paroi (15) de la goulotte de vibration (1'), en particulier dans la zone du fond et/ou dans la zone de la paroi latérale, pour insuffler de l'air de processus.

10. Dispositif selon l'une des revendications 6 à 9, **caractérisé en ce que** des radiateurs rayonnants (18) sont placés au-dessus de la goulotte de vibration (1).

11. Dispositif selon l'une des revendications 6 à 10, **caractérisé en ce qu'**au moins un élément de chauffage et/ou de refroidissement (17) pour l'apport de chaleur et/ou l'évacuation de la chaleur par transmission par contact est placé dans la goulotte de vibration (1).

12. Dispositif selon l'une des revendications 6 à 11, **caractérisé en ce qu'**au moins la zone du fond de la goulotte de vibration (1) peut être chauffée et/ou refroidie.

13. Dispositif selon l'une des revendications 6 à 12, **caractérisé en ce que** les excitateurs d'oscillation (9, 10 ; 19) produisent une oscillation dont la composante dans le sens d'extension dans le sens de la longueur de la goulotte de vibration (1) est plus petite que la composante dans le sens transversal.

14. Dispositif selon l'une des revendications 6 à 13, **caractérisé en ce que** le sens opérationnel des excitateurs d'oscillation (9, 10 ; 19) est ajustable.

15. Dispositif selon l'une des revendications 6 à 14, **caractérisé en ce qu'**un dispositif de commande est prévu pour exciter les excitateurs d'oscillation (9, 10 ; 19) pour faire basculer l'axe de travail des excitateurs d'oscillation (9, 10 ; 19) dans le sens d'extension dans le sens de la longueur de la goulotte de vibration (1) et pour ainsi modifier en fonctionnement une composante d'avancée dans le sens d'extension dans le sens de la longueur de la goulotte de vibration (1).
